**Europäisches Patentamt**

**European Patent Office**

**Office européen des brevets**

(19)

(11) Veröffentlichungsnummer : **0 111 445 B1**

(12) **EUROPÄISCHE PATENTSCHRIFT**

(45) Veröffentlichungstag der Patentschrift :
09.09.87

(51) Int. Cl.⁴ : **H 05 B 3/50, A 47 J 27/00**

(21) Anmeldenummer : **83810546.8**

(22) Anmeldetag : **22.11.83**

(54) **Heizvorrichtung und Verfahren zur Herstellung derselben.**

(30) Priorität : **08.12.82 CH 7148/82**

(43) Veröffentlichungstag der Anmeldung :
**20.06.84 Patentblatt 84/25**

(45) Bekanntmachung des Hinweises auf die Patenterteilung : **09.09.87 Patentblatt 87/37**

(84) Benannte Vertragsstaaten :
**AT DE FR GB**

(56) Entgegenhaltungen :
**EP-A- 0 035 456**
**DE-A- 1 615 203**
**DE-A- 1 654 925**
**DE-A- 2 525 367**
**DE-A- 2 559 232**
**DE-A- 2 908 035**
**GB-A-   487 310**
**US-A- 2 175 824**

(73) Patentinhaber : **Jura Elektroapparate-Fabriken L. Henzirohs AG**

**CH-4626 Niederbuchsiten (CH)**

(72) Erfinder : **Hammer, Urs Leo**
**Schälismühle**
**CH-4625 Oberbuchsiten (CH)**
Erfinder : **Niklaus, Hans**
**Bechburgstrasse 6**
**CH-4500 Solothurn (CH)**

(74) Vertreter : **Tschudi, Lorenz et al**
**Bovard AG Patentanwälte VSP Optingenstrasse 16**
**CH-3000 Bern 25 (CH)**

## Beschreibung

Bei herkömmlichen Heizvorrichtungen, z. B. für Kochgefässe wie Friteusen oder Kochtöpfe oder auch für Bügeleisen ist z. B. der Heizkörper auf der Grundplatte des zu beheizenden Gegenstandes aufgelötet oder aufgeschweisst oder eingepresst. Dadurch ergibt sich ein grosser Wärmeverlust durch die vom Heizkörper seitlich und in von der Grundplatte abgekehrter Richtung abgestrahlten Wärmeenergie. Im weiteren ist es bekannt, Heizkörper in einen Druckguss einzugiessen, wobei dieser Druckguss dann auf den zu beheizenden Gegenstand aufgebracht wird und als Heizvorrichtung dient. Bei der Heizvorrichtung aus Druckguss werden in der Regel nur Stahlohre als Ummantelung des Heizkörpers verwendet, wodurch eine Rostgefahr besteht. Aus der DE-A-25 25 367 ist ein Rohrheizkörper aus einem Druck- oder Spritzguss oder einem Stanzpressprofil vorbekannt. Dieser Rohrheizkörper eignet sich jedoch nicht zur Auheizung der Grundplatte eines elektrothermischen Gerätes, da die fahnenförmigen Teile dieses Rohrheizkörpers nicht als Platte mit genügender Ausdehnung ausgebildet sind. Aus der EP-A1-35 456 (Fig. 2) ist eine Metallplatte mit einer wulst- und kreisringförmigen Erhebung vorbekannt. Innerhalb dieser Erhebung ist ein Heizkörper vorgesehen. Die Platte muss mit der wulstförmigen Erhebung um den Heizkörper geformt werden, was einen komplizierten Herstellungsprozess erforderlich macht. Ausserdem besteht ein Wärmeübergangs-Widerstand zwischen den Wänden 5b und 5c sowie 6b und 6c, welcher nur durch sehr aufwendige und schwierige Verlötung reduziert werden kann, da grösstenteils nur die Platte 1a für die Wärmenutzung in Frage kommt.

Es ist eine Aufgabe der vorliegenden Erfindung, ein Verfahren zur Herstellung eines elektrothermischen Apparates, z. B. für ein Kochgefäss, sowie einen elektrothermischen Apparat zu schaffen, wobei die obgenannten Nachteile vermieden werden. Der Heizkörper soll auf einfache Art und Weise mit der wulstförmigen Ausbuchtung der ersten Aluminiumplatte verbunden werden können. Die vom Heizkörper abgestrahlte Verlustwärme minimalisiert und so eine energiesparende, also auch umweltfreundlich Heizvorrichtung geschaffen werden. Die Einzelteil der Heizvorrichtung sollen auf einfache Art und Weise mit dem zu beheizenden elektrothermischen Apparat verbunden werden können.

Dies wird erfindungsgemäss erzielt durch die kennzeichnenden Merkmale der unabhängigen Patentansprüche 1 und 2. Im Folgenden wird ein Ausführungsbeispiel der Erfindung anhand der beiliegenden Zeichnung näher beschrieben. Es zeigen

Figur 1 einen Längsschnitt durch den Boden einer Friteuse mit Beheizvorrichtung gemäss der Linie I-I der Fig. 2,

Figur 2 eine Ansicht der heizvorrichtung gemäss Fig. 1 von unten,

Figur 3 einen Ausschnitt der Fig. 1 in vergrössertem Massstab.

Auf dem Boden 1 des Friteusenbehälters 2 aus Chrom-Nickel-Stahl sind zwei Aluminiumplatten 3 und 4 aufgelötet. Die erste Aluminiumplatte 3 weist eine wulstartige Ausbuchtung 5 auf, innerhalb welcher ein rohrförmiger Heizkörper 6 vorgesehen ist. Der Heizkörper 6 ist mit zwei Anschlüssen 7 und 8 versehen. Die erste Aluminiumplatte 3 ist mit einer dem Boden des Friteusenbehälters 2 näher liegenden zweiten Aluminiumplatte 4 mitverlötet.

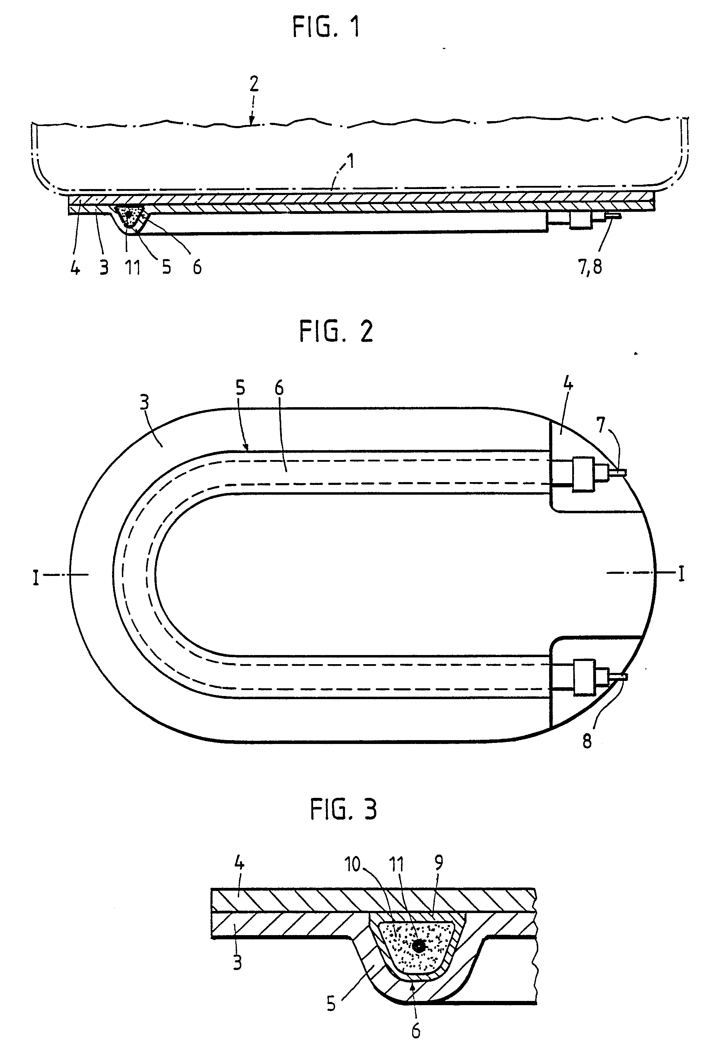

Wie aus Fig. 2 ersichtlich ist, sind wie im vorliegenden Falle der Verwendung der Heizvorrichtung bei einer Friteuse die beiden Aluminiumplatten 3 und 4 oval ausgebildet. Die Aluminiumplatten könnten z. B. aber auch, je nach Verwendungszweck, kreisrund oder rechteckig ausgebildet sein. Der Heizkörper 6 sowie die wulstartige Erhebung 5 der zweiten Aluminiumplatte 4 verlaufen konzentrisch resp. parallel zum äusseren Rand der Aluminiumplatten 3 und 4.

Beim Aufbringen der Heizvorrichtung auf den Boden 1 der Friteuse wird sowohl zwischen der ersten Aluminiumplatte 3 und dem Boden 1 der Friteuse sowie zwischen den beiden Aluminiumplatten 3 und 4 und zwischen dem Heizkörper 6 und der wulstartigen Erhebung 5 der Aluminiumplatte 4 Lötgranulat aufgebracht. In einem Arbeitsgang können alle Elemente miteinander verlötet werden, wobei der Lötvorgang vorzugsweise unter Druck und bei einer geeigneten Frequenz erfolgt. Es ist nur eine kurze Lötzeit notwendig. Es wäre auch denkbar, noch mehr Aluminiumplatten zu verwenden, wobei in dem Falle auch nur eine Herstellungsoperation notwendig wäre, und der Lötvorgang dadurch nicht verlängert würde. Bei dem obgenannten Verfahren ist es auch möglich, Kochgefässe mit einem dünnwandigen Boden (ca. 1 mm) zu verwenden, was bei anderen Verfahren nicht möglich ist.

Falls das Kochgefäss aus Aluminium bestehen würde, könnte gegebenenfalls die erste Aluminiumplatte 3 weggelassen werden, und die zweite Aluminiumplatte 4 mit dem Heizkörper direkt auf den Boden des Kochgefässes gelötet werden, da durch den Aluminiumboden eines Kochgefässes eine bessere Wärmeleitung als bei einem Boden aus Chrom-Nickel-Stahl vorhanden ist.

Das oben beschriebene Verfahren weist auch den Vorteil auf, dass als Ummantelungsrohr für den Heizkörper Aluminium verwendet werden kann, was eine bessere Formgebung des Heizkörpers (kleinere Biegeradien) ermöglicht. Im weiteren wird bei der Verwendung eines Aluminiumrohres für den Heizkörper auch eine Rostgefahr vermieden. Bei der Verwendung eines Stahlrohres würde der Hochfrequenzlötvorgang beeinträchtigt.

Die vorzugsweise dreieckige Form des Heizkörperquerschnittes gewährleistet eine gute Wärmeübertragung einerseits direkt auf die erste Aluminiumplatte 3 und damit auf den Boden 1 des Kochgefässes. Durch die zweite Aluminiumplatte 4 wird die vom Heizkörper 6 seitlich und in einer Richtung weg vom Boden des Gefässes abgegebene Wärmeenergie aufgefangen und auf die erste Aluminiumplatte 3 und den Boden 1 des Kochgefässes durch Wärmeleitung übertragen. Durch das zwischen Heizkörper und Aluminiumplatten, zwischen den Aluminiumplatten und zwischen Aluminiumplatte und Boden des Kochgefässes befindliche Lötmaterial wird die Wärmeübertragung auch verbessert. Die Heizvorrichtung weist im weiteren eine grosse thermische Flexibilität auf, d. h. bei Einschalten der Heizung erfolgt eine sofortige Erwärmung des Kochgutes.

Im weiteren weist die beschriebene Vorrichtung noch den Vorteil auf, dass sie sich bei defektem Heizkörper durch Abreissen ohne grossen zeitlichen und preislichen Aufwand reparieren lässt.

Die Heizvorrichtung, einschliessend Aluminiumplatten 3 und 4, Heizkörper 6 sowie Granulat, ist auch einzeln, unabhängig vom zu beheizenden Gegenstand herstellbar und somit für verschiedene Zwecke geeignet.

Beim Schnitt in Fig. 3 ist noch im Detail der Heizkörper 6 ersichtlich. Innerhalb des Aluminiumrohres 9 ist stark verdichtetes Isoliermaterial 10, z. B. Magnesiumoxyd, vorgesehen. Innerhalb des Isoliermaterials ist die Heizwendel 11 bestehend aus einer hochtemperaturresistenten Legierung angeordnet.

## Patentansprüche

1. Verfahren zur Herstellung eines elektrothermischen Apparates, wobei ein mit einem Aluminiumrohry (9) ummantelter Heizkörper (6) in eine wulstförmige Ausbuchtung (5) einer ersten Aluminumplatte (3) eingelegt und zwischen den Heizkörper (6) und die wulstförmige Ausbuchtung (5) der ersten Aluminiumplatte (3) Lötmaterial aufgebracht wird, dadurch gekennzeichnet, dass der mit einem Aluminiumrohr (9) ummantelte Heizkörper (6) in die durch die wulstförmige Ausbuchtung (5) der ersten Aluminiumplatte (3) gebildete Rinne offen eingelegt wird, wobei auf die plane Fläche der ersten Aluminiumplatte (3) ebenfalls Lötmaterial aufgebracht wird, auf die erste Aluminiumplatte (3) eine zweite plane Aluminiumplatte (4) aufgelegt wird, und auf die zweite Aluminiumplatte (4) ebenfalls Lötmaterial aufgebracht wird, wobei der mit einem Aluminiumrohr (9) ummantelte an der ersten und an der zweiten Aluminiumplatte (3, 4) direkt anliegende Heizkörper (6) sowohl mit der ersten als auch mit der zweiten Aluminiumplatte (3, 4) und die zweite Aluminiumplatte (4) mit einer Grundplatte (1) des zu beheizenden elektrothermischen Apparates in einem Arbeitsvorgang direkt verlötet wird.

2. Elektrothermischer Apparat, hergestellt mit dem Verfahren nach Patentanspruch 1, mit einem in eine wulstförmige Ausbuchtung (5) einer ersten Aluminiumplatte (3) eingelegten mit einem Aluminiumrohr (9) ummantelten Heizkörper (6), dadurch gekennzeichnet, dass eine zweite Aluminiumplatte (4) mit der ersten Aluminiumplatte (3) und mit einer Grundplatte (1) des elektrothermischen Apparates verlötet ist, wobei der mit einem Aluminiumrohr (9) ummantelte Heizkörper (6) sowohl an der ersten als auch an der zweiten Aluminiumplatte (3, 4) direkt anliegt und mit diesen direkt verlötet ist.

## Claims

1. Process for manufacturing an electrothermal apparatus, a heating element (6) jacketed by an aluminium tube (9) being inserted in a toroidal bulge (5) of a first aluminium plate (3), and solder being applied between the heating element (6) and the toroidal bulge (5) of the first aluminium plate (3), characterized in that the heating element (6) jacketed by an aluminium tube (9) is inserted open into the channel formed by the toroidal bulge (5) of the first aluminium plate (3), solder likewise being applied to the plane surface of the first aluminium plate (3), a second plane aluminium plate (4) is placed upon the first aluminium plate (3), and solder is likewise applied to the second aluminium plate (4), the heating element (6) jacketed by an aluminium tube (9) and resting directly against the first and against the second aluminium plate (3, 4) being directly soldered both to the first and to the second aluminium plate (3, 4), and the second aluminium plate (4) to a base plate (1) of the electrothermal apparatus to be heated, in one operation.

2. Electrothermal apparatus manufactured by the process according to patent claim 1, having a heating element (6) jacketed by an aluminium tube (9) inserted in a toroidal bulge (5) of a first aluminium plate (3), characterized in that a second aluminium plate (4) is soldered to the first aluminium plate (3) and to a base plate (1) of the electrothermal apparatus, the heating element (6) jacketed by an aluminium tube (9) resting directly both against the first and against the second aluminium plate (3, 4) and being directly soldered thereto.

## Revendications

1. Procédé de fabrication d'un appareil électrothermique, un élément de chauffage (6) enveloppé d'un tuyau d'aluminium (9) étant posé dans un emboutissage (5) en forme de bourrelet d'une première plaque d'aluminium (3), et du matériel à soudure étant porté entre l'élément de chauffage (6) et l'emboutissage (5) en forme de bourrelet de la première plaque d'aluminium (3), caractérisé en ce que l'élément de chauffage (6) enveloppé d'un tuyau d'aluminium (9) est posé ouvert dans le canal formé par l'emboutissage (5) en forme de bourrelet de la première plaque d'aluminium (3), du matériel à soudure étant également porté sur la surface plane de la première plaque d'aluminium (3), une seconde plaque d'aluminium plane (4) étant superposée sur la première plaque d'aluminium (3), et du matériel à soudure étant également porté sur la seconde plaque d'aluminium (4), l'élément de chauffage (6) enveloppé d'un tuyau d'aluminium (9) apposé directement à la première et la seconde plaque d'aluminium (3, 4) étant soudé directement en une opération aussi bien avec la première qu'avec la seconde plaque d'aluminium (3, 4) et la seconde plaque d'aluminium (4) étant soudé directement avec une plaque de base (1) de l'appareil électro-thermique à chauffer.

2. Appareil électro-thermique, fabriqué selon le procédé de la revendication 1, avec un élément de chauffage (6) enveloppé d'un tuyau d'aluminium (9) posé dans un emboutissage (5) en forme de bourrelet d'une première plaque d'aluminium (3), caractérisé en ce qu'une seconde plaque d'aluminium (4) est soudée avec la première plaque d'aluminium (3) et avec une plaque de base (1) de l'appareil électro-thermique, l'élément de chauffage (6) enveloppé d'un tuyau d'aluminium (9) étant apposé directement aussi bien à la première qu'à la seconde plaque d'aluminium (3, 4) et soudé directement avec celles-ci.

# 0 111 445

## FIG. 1

## FIG. 2

## FIG. 3